# FASCICULE DE BREVET EUROPEEN

(11) **EP 1 375 941 B1**
(45) Date de publication et mention de la délivrance du brevet: **26.01.2005**
(21) Numéro de dépôt: 03291198.4
(22) Date de dépôt: 21.05.2003
(51) Int. Cl.: F16C 33/66

(54) **Palier à roulement étanche amorti à l'huile**
Abgedichtetes ölgedämpftes Wälzlager
Sealed oil dampened roller bearing

(30) Priorité: 20.06.2002 FR 0207613
(43) Date de publication de la demande: 02.01.2004
(73) Titulaire: Snecma Moteurs, 75015 Paris (FR)
(72) Inventeur: Dusserre-Telmon, Guy, 77115 Sivry-Courtry (FR); Plona, Daniel, 77870 Vulaines sur Seine (FR)
(74) Mandataire: Joly, Jean-Jacques

(56) Documents cités:
- EP-A- 0 769 631
- US-A- 5 971 107

## Description

### Domaine de l'invention

La présente invention est relative à un palier à roulement étanche à billes ou à rouleaux muni d'un film d'huile sous pression du type « squeeze film » et destiné à être utilisé notamment dans le domaine aéronautique.

### Arrière-plan de l'invention

Les paliers à roulement sont couramment utilisés dans le domaine aéronautique. Typiquement, les turbomachines aéronautiques telles que des moteurs à turbine à gaz utilisent des paliers à roulement pour supporter les arbres de rotation à l'intérieur d'une pièce de structure. Les paliers à roulement sont essentiellement constitués de billes ou de rouleaux retenus dans des pistes de roulement formées par des bagues extérieures et intérieures. Dans une turbomachine aéronautique, on utilise généralement des paliers à roulement à billes pour tenir aux charges axiales et des paliers à roulement à rouleaux pour tenir aux charges radiales de la turbomachine.

Il est connu d'utiliser de l'huile afin de lubrifier et de refroidir les paliers à roulement d'une turbomachine. Compte-tenu de l'échauffement de la turbomachine et de la vitesse de rotation élevée des arbres de celle-ci, une simple lubrification en injectant de l'huile seulement durant les entretiens de la turbomachine ne suffit pas. On a donc recourt à une lubrification dite dynamique des paliers à roulement. Ce type de lubrification consiste à mettre de l'huile en circulation continue dans un circuit d'alimentation. De l'huile est ainsi injectée entre les bagues des roulements avant de ressortir en évacuant la chaleur produite par ces paliers à roulements. L'huile est ensuite filtrée et désaérée afin de séparer l'air de l'huile. Une enceinte à huile et une enceinte à air supportant les paliers à roulement permettent de fournir un environnement fermé afin d'éviter que de l'huile de lubrification ne s'échappe dans le moteur proprement dit.

La lubrification dynamique des paliers à roulement telle que précédemment décrite présente l'inconvénient majeur de nécessiter la réalisation d'un circuit de circulation de l'huile comprenant des écopes de récupération, des conduits d'alimentation et une pompe, ce qui se traduit par un alourdissement de la turbomachine. La réalisation des enceintes à huile et à air participe également à cet alourdissement de la machine.

Afin de diminuer l'encombrement de telles enceintes, le brevet EP 0 769 631 propose un palier à roulement à billes ou à rouleaux qui utilise l'énergie dynamique créée par la rotation de l'arbre supporté par les billes ou les rouleaux afin de drainer l'huile de lubrification. Un circuit de drainage est réalisé par des orifices de drainage de l'huile de lubrification pratiqués dans l'une des bagues du palier. Ce type de palier à roulement drainé permet de récupérer une majeure partie de l'huile de lubrification.

Il est également connu d'équiper les paliers à roulement de films d'huile du type « squeeze film » afin de réduire les vibrations engendrées par la rotation élevée des arbres de la turbomachine supportés par les paliers à roulement. Typiquement, de l'huile sous pression est confinée entre la bague extérieure et une pièce de structure du palier. L'huile sous pression présente à la surface de contact entre la bague et la pièce de structure joue ainsi le rôle d'amortisseur. Généralement, ces paliers amortis à l'huile sont rendus étanches par l'intermédiaire de deux joints annulaires interposés entre la bague extérieure et la pièce de structure. Le film d'huile est ainsi délimité par ces deux joints d'étanchéité.

Ce type de roulement à palier amorti à l'huile présente toutefois un problème d'étanchéité. En effet, on constate dans la pratique que l'huile confinée entre les deux joints d'étanchéité a tendance à s'écouler en dehors du film d'huile. La présence des joints d'étanchéité ne permet pas d'éviter de telles fuites. Notamment, des écoulements d'huile apparaissent du côté de l'enceinte à huile, ce qui est acceptable, mais également du côté de l'enceinte à air. De tels écoulements du côté de l'enceinte à air sont particulièrement préjudiciables au bon fonctionnement de la turbomachine.

### Objet et résumé de l'invention

La présente invention vise donc à pallier un tel inconvénient en proposant un palier à roulement étanche muni d'un palier amorti à l'huile comportant des circuits particuliers d'alimentation et de récupération de l'huile de lubrification permettant d'assurer une meilleure étanchéité du côté de l'enceinte à air. Un but de l'invention est aussi de simplifier la réalisation des enceintes à huile en vue de réduire le coût et la masse de l'ensemble.

A cet effet, il est prévu un palier à roulement pour le support d'un arbre en rotation à l'intérieur d'une pièce de structure annulaire, le palier définissant une séparation entre une enceinte à huile et une enceinte à air et comprenant une pluralité d'éléments de roulement engagés entre une bague intérieure et une bague extérieure et définissant une première ouverture latérale du côté de l'enceinte à air et une seconde ouverture latérale du côté de l'enceinte à huile ; au moins une pièce de jonction annulaire liée mécaniquement à la bague extérieure et ayant une surface de contact annulaire avec la pièce de structure ; un film d'huile disposé au niveau de la surface de contact annulaire entre la pièce de structure et la pièce de jonction et délimité latéralement par au moins deux joints annulaires d'étanchéité ; et des moyens d'étanchéité recouvrant au moins en partie la première ouverture latérale du côté de l'enceinte à air ; caractérisé en ce qu'il comporte en outre des premiers moyens de circulation de l'huile pour alimenter en huile le film d'huile et, à partir du film d'huile, alimenter en huile les éléments de roulement du côté de l'enceinte à huile afin d'assurer leur lubrification ; et des seconds moyens de circulation de l'huile, indépendants des premiers, pour récupérer l'huile ayant servi à la lubrification des éléments de roulement, les seconds moyens de circulation de l'huile étant agencés de façon à éviter que de l'huile ne s'écoule vers l'enceinte à air.

De la sorte, les deux moyens indépendants de circulation de l'huile permettent d'assurer un drainage à la fois de l'huile de lubrification des éléments de roulement et, du côté de l'enceinte à air, des fuites provenant du film d'huile. L'étanchéité du palier à roulement du côté de l'enceinte à air est réalisée d'une part par les moyens d'étanchéité et d'autre part par les moyens de circulation de l'huile qui permettent de récupérer la majeure partie de l'huile ayant servi à lubrifier les éléments de roulement. L'étanchéité du palier à roulement permet alors de simplifier la réalisation des enceintes à air et à huile.

Les premiers moyens de circulation de l'huile comportent, de préférence, au moins un premier conduit d'alimentation traversant la pièce de structure et débouchant entre les joints d'étanchéité au niveau de la surface de contact annulaire pour alimenter en huile le film à huile, et au moins un second conduit d'alimentation traversant la pièce de jonction et s'ouvrant au niveau de la surface de contact annulaire, entre les joints d'étanchéité.

Le second conduit d'alimentation débouche, de préférence par l'intermédiaire d'au moins une gorge annulaire pratiquée dans la pièce de jonction, vers des moyens d'alimentation en huile des éléments de roulement permettant d'assurer une lubrification des éléments de roulement. Ces moyens peuvent comporter un flasque gicleur disposé au niveau de la seconde ouverture latérale du côté de l'enceinte à huile.

Avantageusement, les seconds moyens de circulation de l'huile comportent au moins un premier conduit de récupération traversant la bague extérieure et s'ouvrant au niveau des éléments de roulement, au moins un deuxième conduit de récupération pratiqué dans la pièce de jonction, le deuxième conduit communiquant avec le premier conduit de récupération et débouchant au niveau de la surface de contact annulaire en dehors du film d'huile du côté de l'enceinte à air, et au moins un troisième conduit de récupération traversant la pièce de structure, le troisième conduit de récupération s'ouvrant au niveau de la surface de contact annulaire en dehors du film d'huile du côté de l'enceinte à air et débouchant vers des moyens de pompage de l'huile. Les moyens de pompage permettent de récupérer l'huile ayant servi à lubrifier les éléments de roulement afin de la filtrer avant de l'injecter de nouveau dans le palier à roulement par les premiers moyens de circulation de l'huile.

Il peut en outre être prévu un joint annulaire d'étanchéité supplémentaire disposé au niveau de la surface de contact annulaire et au-delà des deuxième et troisième conduits de récupération, du côté de l'enceinte à air. Ce joint d'étanchéité supplémentaire est facultatif si les moyens de pompage présentent un débit suffisamment important.

Les moyens d'étanchéité peuvent comporter un flasque d'étanchéité fixé à la bague extérieure et se prolongeant par une extrémité libre vers la bague intérieure ou bien un flasque d'étanchéité intégré à la bague extérieure et se prolongeant vers la bague intérieure par au moins un joint à brosse.

Les éléments de roulement peuvent être constitués par des billes ou des rouleaux.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique en coupe longitudinale d'un turboréacteur montrant l'emplacement des différents paliers à roulement ;
- la figure 2 représente plus précisément un palier à roulement à billes selon l'invention ;
- la figure 3 représente un palier à roulement à rouleaux selon l'invention ; et
- la figure 4 représente un palier à roulement à rouleaux selon une variante de l'invention.

### Description détaillée d'un mode de réalisation

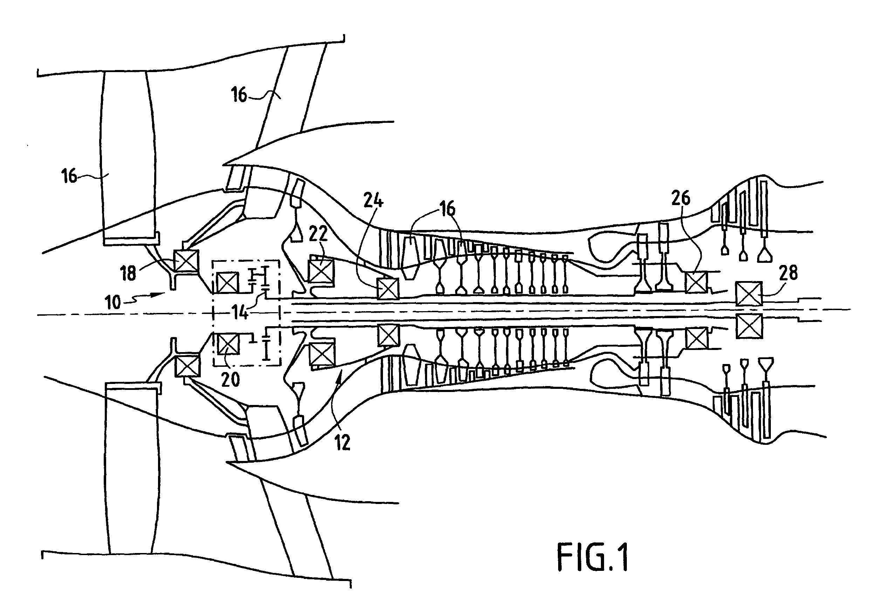

La figure 1 représente une coupe longitudinale d'un turboréacteur. Le turboréacteur est notamment constitué d'un arbre avant 10 et d'un arbre arrière 12 coaxiaux et réunis par un réducteur 14. Les arbres 10 et 12 portent des aubes 16 de compresseurs et de turbines et les font tourner à des vitesses différentes par l'intermédiaire du réducteur 14. Afin de tenir aux charges radiales et axiales, les arbres 10 et 12 sont supportés par des paliers à roulement. Ainsi, l'arbre avant 10 est supporté par palier à roulement à billes 18 (pour tenir aux charges axiales) et par un palier à roulement à rouleaux 20 (pour tenir aux charges radiales) disposé au niveau du réducteur 14. De même, l'arbre arrière 12 est soutenu à une extrémité avant par des paliers à roulement à billes 22, 24 et à l'autre extrémité par des paliers à roulement à rouleaux 26, 28.

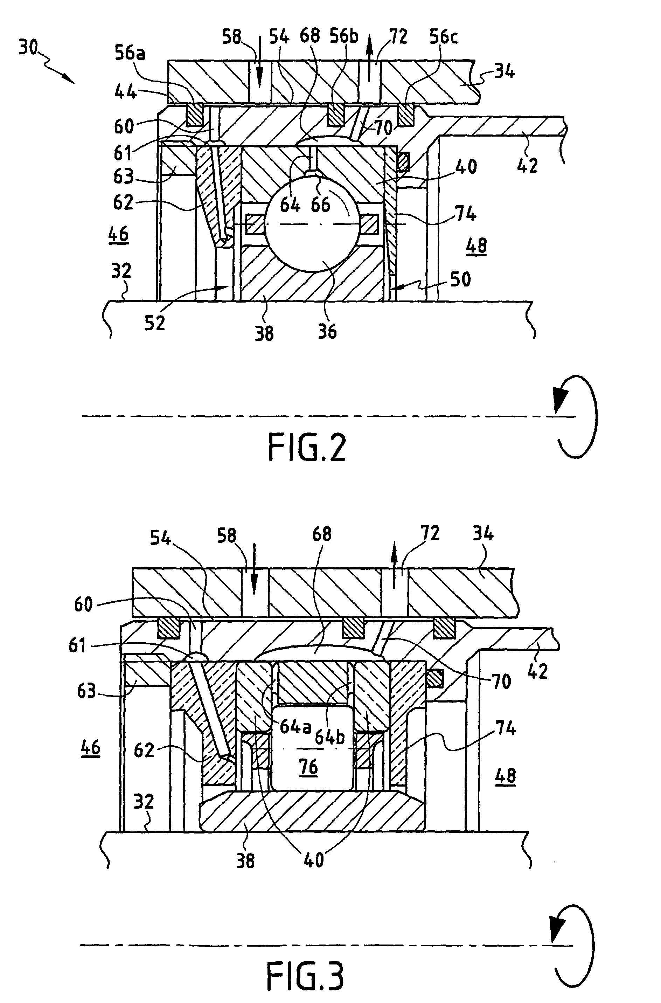

On se réfère maintenant à la figure 2 qui représente plus particulièrement un exemple de réalisation d'un palier à roulement à billes 30 selon l'invention. Ce palier peut par exemple remplacer les paliers à roulement à billes 18, 22 et 24 précédemment décrits.

Le palier à roulement à billes 30 est disposé entre un arbre 32 et une pièce de structure annulaire 34. Typiquement, le palier 30 comporte une pluralité de billes 36 engagées entre des faces internes d'une bague intérieure 38 et d'une bague extérieure 40 formant des pistes de roulement pour retenir les billes. Une pièce de jonction 42, également annulaire, est interposée entre la bague extérieure 40 et la pièce de structure 34.

Plus précisément, cette pièce de jonction 42 est liée mécaniquement à une face externe de la bague extérieure 40 et présente une surface de contact annulaire 44 avec la pièce de structure 34. Le palier définit ainsi une séparation entre une enceinte dite « à huile » 46 et une enceinte dite « à air » 48. De plus, les billes engagées entre les bagues 38 et 40 définissent une première ouverture latérale 50 du côté de l'enceinte à air 48 et une seconde ouverture latérale 52 du côté de l'enceinte à huile 46.

Afin d'amortir les efforts transmis de l'arbre 32 vers la pièce de structure externe 34, le palier de roulement est muni d'un film d'huile 54. Ce film d'huile 54 formant amortisseur est disposé au niveau de la surface de contact annulaire 44 entre la pièce de structure 34 et la pièce de jonction 42 et est délimité latéralement par deux joints annulaires d'étanchéité 56a, 56b. Ces joints d'étanchéité 56a, 56b sont placés dans deux gorges annulaires (non représentées) usinées dans la pièce de jonction 42 à la surface de contact 44 avec la pièce de structure 34. Le film d'huile 54 est ainsi confiné entre ces deux joints d'étanchéité 56a, 56b.

Selon l'invention, des premiers moyens de circulation de l'huile permettent notamment d'alimenter en huile le film d'huile 54. Pour ce faire, au moins un premier conduit d'alimentation 58 traverse complètement la pièce de structure 34 et débouche entre les deux joints d'étanchéité 56a, 56b au niveau de la surface de contact 44 entre la pièce de structure 34 et la pièce de jonction 42. En amont du film d'huile 54, ce premier conduit d'alimentation 58 est relié à des canalisations (non représentées sur les figures) menant à une installation de lubrification ordinaire, à pompe et bâche d'huile qui permet la mise en circulation de l'huile.

Au moins un second conduit d'alimentation 60 traverse complètement la pièce de jonction 42 et s'ouvre également entre les deux joints d'étanchéité 56a, 56b au niveau du film à huile 54. Ce second conduit d'alimentation 60 débouche, de préférence par l'intermédiaire d'au moins une gorge annulaire 61 pratiquée dans la pièce de jonction 42, vers des moyens d'alimentation en huile des billes 36 afin d'assurer, à partir du film à huile 54, une lubrification de ces billes. Les moyens d'alimentation en huile des billes peuvent par exemple comporter un flasque gicleur 62 disposé au niveau de la seconde ouverture latérale 52 du côté de l'enceinte à huile 46. Comme représenté sur la figure 2, le flasque gicleur 62 est maintenu contre la bague extérieure 40 par une bague de fixation filetée 63 et se prolonge vers la bague intérieure 38. Il permet ainsi d'injecter de l'huile directement au niveau des billes 36.

Des seconds moyens de circulation de l'huile, indépendants des premiers, permettent de récupérer l'huile ayant servi à lubrifier les billes 36. Au moins un premier conduit de récupération 64 traverse complètement la bague extérieure 40 et s'ouvre au niveau des billes 36, de préférence par l'intermédiaire d'au moins une gorge annulaire 66 pratiquée dans la bague extérieure. De plus, ce premier conduit de récupération 64 débouche avantageusement au niveau d'une gorge collectrice annulaire 68 pratiquée dans la pièce de jonction 42. Au moins un deuxième conduit de récupération 70 pratiqué dans la pièce de jonction 42 s'ouvre dans la gorge collectrice annulaire 68 et débouche au niveau de la surface de contact 44 entre la pièce de structure 34 et la pièce de jonction 42 en dehors du film d'huile 54 du côté de l'enceinte à air 48. En outre, au moins un troisième conduit de récupération 72 est pratiqué dans la pièce de structure 34. Ce troisième conduit de récupération 72 traverse complètement cette pièce et s'ouvre au niveau de la surface de contact 44 entre la pièce de structure 34 et la pièce de jonction 42 en dehors du film d'huile 54 du côté de l'enceinte à air 48. Ce conduit 72 qui est relié à des canalisations menant à l'installation de lubrification ordinaire permet notamment de récupérer l'huile ayant servi à lubrifier les billes 36 par l'intermédiaire de la pompe. Il est également possible que de l'air provenant de l'enceinte à air 48 soit aspiré et récupéré par la pompe de l'installation de lubrification. Dans ce cas, un dispositif de désaérage de l'huile (non représenté sur les figures) devra être prévu au niveau de l'installation de lubrification afin de séparer l'air de l'huile récupérée.

Afin d'assurer l'étanchéité du palier à roulement 30 du côté de l'enceinte à air 48, des moyens d'étanchéité recouvrent au moins en partie la première ouverture latérale 50. Comme représenté sur la figure 2, ces moyens d'étanchéité peuvent être constitués d'un flasque 74 fixé à une extrémité à la bague extérieure 40 et se prolongeant, à l'extrémité libre opposée, vers la bague intérieure 38.

Il peut être prévu un joint annulaire d'étanchéité supplémentaire 56c disposé au niveau de la surface de contact 44 entre la pièce de structure 34 et la pièce de jonction 42 au-delà des deuxième et troisième conduits de récupération 70, 72 du côté de l'enceinte à air 48. Ce joint d'étanchéité supplémentaire 56c permet d'éviter que de l'huile ne s'écoule vers l'enceinte à air 48. Toutefois, la présence de ce joint d'étanchéité supplémentaire 56c n'est pas nécessaire si le débit de la pompe de l'installation de lubrification est suffisamment important pour éviter que de l'huile ne s'écoule vers l'enceinte à air.

On se réfère maintenant à la figure 3 qui représente un palier à roulement à rouleaux 76 selon l'invention. Ce palier peut par exemple remplacer les paliers à roulement à rouleaux 20, 26 et 28 précédemment décrits. Le palier à roulement à rouleaux comporte les mêmes moyens de circulation de l'huile que ceux décrits pour le palier à roulement à billes. Toutefois, les seconds moyens de circulation de l'huile représentés comportent au moins deux premiers conduits de récupération 64a, 64b pratiqués dans la bague extérieure 40 et débouchant dans une gorge annulaire 68 aménagée dans la pièce de jonction 42. Les moyens d'étanchéité du côté de l'enceinte à air sont également constitués d'un flasque 74 fixé à la bague extérieure 40.

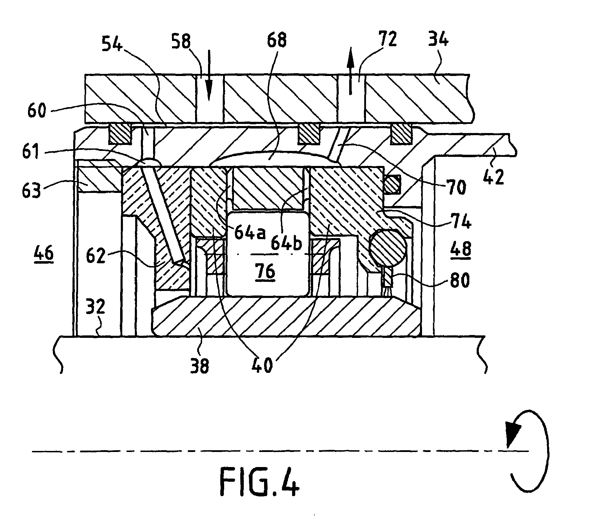

La figure 4 représente également un palier à roulement à rouleaux 76 selon l'invention. Dans cet exemple de réalisation, les moyens d'étanchéité du côté de l'enceinte à air sont réalisés par un flasque d'étanchéité 74 intégré à la bague extérieure 40 et se prolongeant vers la bague intérieure 38 par au moins un joint à brosse 80. Les moyens de circulation de l'huile sont identiques à ceux du palier à roulement à rouleaux de la figure 3.

## Revendications

1. Palier à roulement pour le support d'un arbre (32) en rotation à l'intérieur d'une pièce de structure annulaire (34), ledit palier définissant une séparation entre une enceinte à huile (46) et une enceinte à air (48) et comprenant :
une pluralité d'éléments de roulement (36, 76) engagés entre une bague intérieure (38) et une bague extérieure (40) et définissant une première ouverture latérale (50) du côté de ladite enceinte à air et une seconde ouverture latérale (52) du côté de ladite enceinte à huile ;
au moins une pièce de jonction annulaire (42) liée mécaniquement à ladite bague extérieure et ayant une surface de contact annulaire (44) avec ladite pièce de structure ;
un film d'huile (54) disposé au niveau de ladite surface de contact annulaire entre ladite pièce de structure et ladite pièce de jonction et délimité latéralement par au moins deux joints annulaires d'étanchéité (56a, 56b) ; et
des moyens d'étanchéité (74, 80) recouvrant au moins en partie ladite première ouverture latérale du côté de ladite enceinte à air ;
**caractérisé en ce qu'**il comporte en outre :
des premiers moyens de circulation de l'huile pour alimenter en huile ledit film d'huile (54) et, à partir dudit film d'huile, alimenter en huile lesdits éléments de roulement (36, 76) du côté de ladite enceinte à huile (46) afin d'assurer leur lubrification ; et
des seconds moyens de circulation de l'huile, indépendants des premiers, pour récupérer l'huile ayant servi à la lubrification desdits éléments de roulement, lesdits seconds moyens de circulation de l'huile étant agencés de façon à éviter que de l'huile ne s'écoule vers ladite enceinte à air (48).

2. Palier selon la revendication 1, **caractérisé en ce que** lesdits premiers moyens de circulation de l'huile comportent :
au moins un premier conduit d'alimentation (58) traversant ladite pièce de structure (34) et débouchant entre lesdits joints d'étanchéité (56a, 56b) au niveau de ladite surface de contact annulaire (44) pour alimenter en huile ledit film à huile (54) ; et
au moins un second conduit d'alimentation (60) traversant ladite pièce de jonction (42) et s'ouvrant au niveau de ladite surface de contact annulaire entre lesdits joints d'étanchéité.

3. Palier selon la revendication 2, **caractérisé en ce que** ledit second conduit d'alimentation (60) débouche vers des moyens d'alimentation en huile desdits éléments de roulement (36, 76) permettant d'assurer une lubrification desdits éléments de roulement.

4. Palier selon la revendication 3, **caractérisé en ce que** lesdits moyens d'alimentation comportent un flasque gicleur (62) disposé au niveau de ladite seconde ouverture latérale (52) du côté de ladite enceinte à huile (46).

5. Palier selon l'une quelconque des revendications 2 à 4, **caractérisé en ce que** ledit second conduit d'alimentation (60) débouche au niveau d'au moins une gorge annulaire (61) pratiquée dans ladite pièce de jonction (42).

6. Palier selon l'une quelconque des revendications 1 à 5, **caractérisé en ce que** lesdits seconds moyens de circulation de l'huile comportent :
au moins un premier conduit de récupération (64) traversant ladite bague extérieure (40) et s'ouvrant au niveau desdits éléments de roulement (36, 76) ;
au moins un deuxième conduit de récupération (70) pratiqué dans ladite pièce de jonction (42), ledit deuxième conduit communiquant avec ledit premier conduit de récupération et débouchant au niveau de ladite surface de contact annulaire (44) en dehors dudit film d'huile (54) du côté de ladite enceinte à air (48) ; et
au moins un troisième conduit de récupération (72) traversant ladite pièce de structure (34), ledit troisième conduit de récupération s'ouvrant au niveau de ladite surface de contact annulaire (44) en dehors dudit film d'huile du côté de ladite enceinte à air et débouchant vers des moyens de pompage de l'huile.

7. Palier selon la revendication 6, **caractérisé en ce qu'**il comporte en outre un joint annulaire d'étanchéité supplémentaire (56c) disposé au niveau de ladite surface de contact annulaire (44) et au-delà desdits deuxième et troisième conduits de récupération (70, 72) du côté de ladite enceinte à air (48).

8. Palier selon l'une des revendications 6 et 7, **caractérisé en ce que** ledit premier conduit de récupération (64) s'ouvre au niveau desdits éléments de roulement (36, 76) par l'intermédiaire d'au moins une gorge annulaire (66) pratiquée dans ladite bague extérieure (40).

9. Palier selon l'une quelconque des revendications 6 à 8, **caractérisé en ce que** lesdits premier et deuxième conduits de récupération (64, 70) communiquent entre eux par l'intermédiaire d'au moins une gorge annulaire (68) pratiquée dans ladite pièce de jonction (42).

10. Palier selon l'une quelconque des revendications 1 à 9, **caractérisé en ce que** lesdits moyens d'étanchéité comportent un flasque d'étanchéité (74) fixé à ladite bague extérieure (40) et se prolongeant par une extrémité libre vers ladite bague intérieure (38).

11. Palier selon l'une quelconque des revendications 1 à 9, **caractérisé en ce que** lesdits moyens d'étanchéité comportent un flasque d'étanchéité intégré (74) à ladite bague extérieure (40) et se prolongeant vers ladite bague intérieure (38) par au moins un joint à brosse (80).

12. Palier selon l'une quelconque des revendications 1 à 11, **caractérisé en ce que** lesdits éléments de roulement sont des billes (36).

13. Palier selon l'une quelconque des revendications 1 à 11, **caractérisé en ce que** lesdits éléments de roulement sont des rouleaux (76).

## Patentansprüche

1. Wälzlager zum Stützen einer sich innerhalb eines ringförmigen Strukturteils (34) drehenden Welle (32), wobei das Lager eine Trennung zwischen einem Ölraum (46) und einem Luftraum (48) definiert und folgendes umfaßt:
eine Vielzahl von Wälzkörpem (36, 76), die zwischen einem Innenring (38) und einem Außenring (40) eingesetzt sind und die eine erste seitliche Öffnung (50) auf der Seite des Luftraums sowie eine zweite seitliche Öffnung (52) auf der Seite des Ölraums bilden;
wenigstens ein ringförmiges Verbindungsteil (42), das mit dem Außenring mechanisch verbunden ist und eine ringförmige Kontaktfläche (44) mit dem Strukturteil aufweist;
einen Ölfilm (54), welcher im Bereich der ringförmigen Kontaktfläche zwischen dem Strukturteil und dem Verbindungsteil angeordnet und seitlich durch wenigstens zwei ringförmige Dichtungen (56a, 56b) begrenzt ist; und
Dichtungsmittel (74, 80), welche die erste seitliche Öffnung auf der Seite des Luftraums wenigstens teilweise bedecken;
**dadurch gekennzeichnet daß** es weiterhin folgendes aufweist:
erste Ölzirkulationsmittel, um den genannten Ölfilm (54) mit Öl zu versorgen und um mittels des Ölfilms die genannten Wälzkörper (36, 76) auf der Seite des Ölraums (46) mit Öl zu versorgen, um deren Schmierung zu gewährleisten; und
von den ersten unabhängige zweite Ölzirkulationsmittel, um das Öl zurückzugewinnen, das zur Schmierung der Wälzkörper diente, wobei die zweiten Ölzirkulationsmittel derart angeordnet sind, daß ein Fließen von Öl zur Luftkammer (48) vermieden wird.

2. Lager nach Anspruch 1, **dadurch gekennzeichnet, daß** die ersten Ölzirkulationsmittel folgendes aufweisen:
wenigstens eine erste Versorgungsleitung (58), welche das Strukturteil (34) durchquert und zwischen den genannten Dichtungen (56a, 56b) im Bereich der ringförmigen Kontaktfläche (44) mündet, um den Ölfilm (54) mit Öl zu versorgen; und
wenigstens eine zweite Versorgungsleitung (60), welche das Verbindungsteil (42) durchquert und sich im Bereich der ringförmigen Kontaktfläche zwischen den Dichtungen öffnet.

3. Lager nach Anspruch 2, **dadurch gekennzeichnet, daß** die zweite Versorgungsleitung (60) in Richtung auf Mittel zur Ölversorgung der Wälzkörper (36, 76) mündet, die ermöglichen, eine Schmierung der Wälzkörper zu gewährleisten.

4. Lager nach Anspruch 3, **dadurch gekennzeichnet, daß** die genannten Versorgungsmittel einen Düsenflansch (62) enthalten, welcher im Bereich der zweiten Seitenöffnung (52) auf der Seite des Ölraums (46) angeordnet ist.

5. , Lager nach einem der Ansprüche 2 bis 4, **dadurch gekennzeichnet, daß** die zweite Versorgungsleitung (60) im Bereich von wenigstens einer in dem Verbindungsteil (42) ausgebildeten Ringnute (61) mündet.

6. Lager nach einem der Ansprüche 1 bis 5, **dadurch gekennzeichnet, daß** die zweiten Ölzirkulationsmittel folgendes aufweisen:
wenigstens eine erste Rückgewinnungsleitung (64), die den Außenring (40) durchquert und die sich im Bereich der Wälzkörper (36, 76) öffnet;
wenigstens eine zweite Rückgewinnungsleitung (70), die in dem Verbindungsteil (42) ausgebildet ist, wobei die zweite Leitung mit der ersten Rückgewinnungsleitung in Verbindung steht und im Bereich der ringförmigen Kontaktfläche (44) außerhalb des Ölfilms (54) auf der Seite des Luftraums (48) mündet; und
wenigstens eine dritte Rückgewinnungsleitung (72), welche das Strukturteil (34) durchquert, wobei die dritte Rückgewinnungsleitung sich im Bereich der ringförmigen Kontaktfläche (44) außerhalb des Ölfilms auf der Seite des Luftraums öffnet und zu Ölpumpmitteln hin mündet.

7. Lager nach Anspruch 6, **dadurch gekennzeichnet, daß** es außerdem eine zusätzliche ringförmige Dichtung (56c) aufweist, die im Bereich der ringförmigen Kontaktfläche (44) und jenseits der zweiten und der dritten Rückgewinnungsteitung (70, 72) auf der Seite des Luftraums (48) angeordnet ist.

8. Lager nach einem der Ansprüche 6 und 7, **dadurch gekennzeichnet, daß** die erste Rückgewinnungsleitung (64) sich im Bereich der Wälzkörper (36, 76) über wenigstens eine in dem Außenring (40) ausgebildete Ringnute (66) öffnet.

9. Lager nach einem der Ansprüche 6 ä 8, **dadurch gekennzeichnet, daß** die erste und die zweite Rückgewinnungsleitung (64, 70) über wenigstens eine in dem Verbindungsteil (42) ausgebildete Ringnute (68) miteinander in Verbindung stehen.

10. Lager nach einem der Ansprüche 1 bis 9, **dadurch gekennzeichnet, daß** die Dichtungsmittel einen Dichtungsflansch (74) aufweisen, der an dem Außenring (40) befestigt ist und der sich über ein freies Ende zum Innenring (38) hin fortsetzt.

11. Lager nach einem der Ansprüche 1 bis 9, **dadurch gekennzeichnet, daß** die Dichtungsmittel einen Dichtungsflansch (74) aufweisen, der in den Außenring (40) integriert ist und der sich über wenigstens eine Bürstendichtung (80) zum Innenring (38) hin fortsetzt.

12. Lager nach einem der Ansprüche 1 bis 11, **dadurch gekennzeichnet, daß** die Wälzkörper Kugeln (36) sind.

13. Lager nach einem der Ansprüche 1 bis 11, **dadurch gekennzeichnet, daß** die Wälzkörper Rollen (76) sind.

## Claims

1. A rolling bearing for supporting a shaft (32) in rotation inside an annular structural piece (34), said bearing defining a separation between an oil enclosure (46) and an air enclosure (48), and comprising:
a plurality of rolling elements (36, 76) engaged between an inner bearing ring (38) and an outer bearing ring (40) and defining a first side opening (50) beside said air enclosure and a second side opening (52) beside said oil enclosure;
at least one annular junction piece (42) mechanically connected to said outer bearing ring and having an annular contact surface (44) with said structural piece;
an oil film (54) disposed at said annular contact surface between said structural piece and said junction piece and laterally defined by at least two sealing rings (56a, 56b); and
sealing means (74, 80) covering at least part of said first side opening beside said air enclosure;
the bearing being **characterised in that** it further includes:
first oil circulation means for feeding said oil film (54) with oil and for feeding said rolling elements (36, 76) beside said oil enclosure (46) with oil from said oil film in order to lubricate them; and
second oil circulation means, independent of the first, for recovering the oil that has been used for lubricating said rolling elements, said second oil circulation means being arranged in such a manner as to avoid oil flowing towards said air enclosure (48).

2. A bearing according to claim 1, **characterised in that** said first oil circulation means include:
at least one first feed duct (58) passing through said structural piece (34) and opening out between said sealing rings (56a, 56b) at said annular contact surface (44) in order to feed said oil film (54) with oil; and
at least one second feed duct (60) passing through said junction piece (42) and opening out at said annular contact surface between said sealing rings.

3. A bearing according to claim 2, **characterised in that** said second feed duct (60) opens out towards means for feeding said rolling elements (36, 76) with oil enabling said rolling elements to be lubricated.

4. A bearing according to claim 3, **characterised in that** said feed means include a nozzle-forming side plate (62) disposed at said second side opening (52) beside said oil enclosure (46).

5. A bearing according to any one of claims 2 to 4, **characterised in that** said second feed duct (60) opens out into at least one annular groove (61) formed in said junction piece (42).

6. A bearing according to any one of claims 1 to 5, **characterised in that** said second oil circulation means include:
at least one first recovery duct (64) passing through said outer bearing ring (40) and opening out at said rolling elements (36, 76);
at least one second recovery duct (70) formed in said junction piece (42), said second duct communicating with said first recovery duct and opening out into said annular contact surface (44) away from said oil film (54) beside said air enclosure (48); and
at least one third recovery duct (72) passing through said structural piece (34), said third recovery duct opening out to said annular contact surface (44) outside said oil film beside said air enclosure and opening out to oil pumping means.

7. A bearing according to claim 6, **characterised in that** it further includes an additional sealing ring (56c) disposed at said annular contact surface (44) beyond said second and third recovery ducts (70, 72) beside said air enclosure (48).

8. A bearing according to claim 6 or 7, **characterised in that** said first recovery duct (64) opens out to said rolling elements (36, 76) via at least one annular groove (66) formed in said outer bearing ring (40).

9. A bearing according to any one of claims 6 to 8, **characterised in that** said first and second recovery ducts (64, 70) communicate with each other via at least one annular groove (68) formed in said junction piece (42).

10. A bearing according to any one of claims 1 to 9, **characterised in that** said sealing means comprise a sealing side plate (74) fixed to said outer bearing ring (40) and extending via a free end towards said inner bearing ring (38).

11. A bearing according to any one of claims 1 to 9, **characterised in that** said sealing means comprise a sealing side plate (74) integral with said outer bearing ring (40) and extending towards said inner bearing ring (38) via at least one brush gasket (80).

12. A bearing according to any one of claims 1 to 11, **characterised in that** said rolling elements are balls (36).

13. A bearing according to any one of claims 1 to 11, **characterised in that** said rolling elements are rollers (76).
